(19) **Europäisches Patentamt / European Patent Office / Office européen des brevets**

(11) **EP 1 695 814 B1**

(12) **EUROPEAN PATENT SPECIFICATION**

(45) Date of publication and mention
of the grant of the patent:
**01.07.2009  Bulletin 2009/27**

(21) Application number: **04818503.7**

(22) Date of filing: **12.11.2004**

(51) Int Cl.:
*B29D 30/06* (2006.01)     *B60C 17/06* (2006.01)
*B60C 17/04* (2006.01)     *B21D 26/02* (2006.01)
*B21D 53/26* (2006.01)     *B21D 51/12* (2006.01)
*B21D 15/10* (2006.01)

(86) International application number:
**PCT/JP2004/016821**

(87) International publication number:
**WO 2005/046976 (26.05.2005 Gazette 2005/21)**

(54) **METHOD OF PRODUCING RUN-FLAT TIRE SUPPORTING BODY**

VERFAHREN ZUR HERSTELLUNG EINES RUN-FLAT-REIFEN-STÜTZKÖRPERS

PROCEDE DE PRODUCTION D'UN CORPS DE SUPPORT DE PNEU A FLANCS RENFORCES

(84) Designated Contracting States:
**DE FR**

(30) Priority: **12.11.2003  JP 2003382001**

(43) Date of publication of application:
**30.08.2006  Bulletin 2006/35**

(73) Proprietor: **Bridgestone Corporation**
**Tokyo 104-8340 (JP)**

(72) Inventors:
• **NAKAZAWA, Kazuma,**
  **c/o BRIDGEST0NE CORPORATION**
  **Tokyo 104-8340 (JP)**
• **SUGIO, Daisuke,**
  **c/o BRIDGEST0NE CORPORATION**
  **Tokyo 104-8340 (JP)**
• **INO, Fumitaka,**
  **Tokyo 188-0004 (JP)**

• **IZUMOTO, Ryuji,**
  **c/o BRIDGEST0NE CORPORATION**
  **Tokyo 104-8340 (JP)**
• **IWASAKI, Shinichi,**
  **c/o BRIDGEST0NE CORPORATION**
  **Tokyo 104-8340 (JP)**
• **HIRATA, Narukuni,**
  **c/o BRIDGEST0NE CORPORATION**
  **Tokyo 104-8340 (JP)**

(74) Representative: **Whalley, Kevin**
**Marks & Clerk LLP**
**90 Long Acre**
**London WC2E 9RA (GB)**

(56) References cited:
| JP-A- 5 504 726 | JP-A- 10 297 226 |
| JP-A- 52 130 465 | JP-A- 53 026 253 |
| JP-A- 2001 519 279 | JP-A- 2002 234 304 |
| JP-A- 2004 001 022 | JP-A- 2004 034 904 |
| JP-A- 2004 148 707 | JP-A- 2004 160 542 |

## Description

The present invention relates to a method for producing a run flat tire supporting member to be provided inside a tire for allowing a running operation for a considerable distance in the state where the internal air pressure is reduced by a puncture, or the like.

As a pneumatic tire capable of run flat running, that is a tire capable of running safely for a certain distance even in the case it is punctured so that the tire internal pressure becomes 0Pa (hereinafter referred to as a run flat tire), a core type run flat tire with a core (supporting member) mounted as a rim portion in the tire air chamber is known (see for example the patent article 1).

The main constituent member of such a core (supporting member) is a ring shaped supporting member (shell). According to the production of the supporting member (shell), after cutting a metal plate like material by a predetermined length, a bending process into a ring like shape is applied and both end parts in the longitudinal direction are bonded with each other so as to provide a cylindrical member, and a process such as a spinning process may be applied to the metal cylindrical member.

Here, since a large load is applied to the supporting member (shell) when run flat running, in the case that strength decline is generated due to the characteristic change of a welded part and the vicinity of the welded part, strength administration after processing or mounting has been troublesome.

Patent article 1: the official gazette of the Japanese Patent Application Laid-Open (JP-A) No. 10-297226.

Attention is also drawn to the disclosures of JP-2004-001022 A, JP-53-026253 A, JP-2004-034904 A, JP-52-130465 A, and JP-A-5-504726.

In consideration to the above-mentioned facts, an object of the invention is to provide a production method for a run flat tire supporting member without a joint.

A production method for a run flat tire supporting member of the invention according to a first aspect is a production method for a run flat tire supporting member capable of supporting a load when run flat running comprising; shaping a cylindrical member having a bottom part out of a flat plate metal material by deep drawing process, removing an opening part side and the bottom part side of the cylindrical member, and curving the cylindrical member into a shape comprising a projecting part with the axial direction middle part of the cylindrical member projecting to the outside in the radial direction.

According to this production method for a run flat tire supporting member of the invention a run flat tire supporting member is shaped by shaping a cylindrical member having a bottom part out of a flat plate metal material by deep drawing process, after removing the opening part side and the bottom part side of the cylindrical member, and curving the cylindrical member into a shape comprising a projecting part with the axial direction middle part of the cylindrical member projecting to the outside in the radial direction. Accordingly, by removing the opening part side and the bottom part side of the cylindrical member after the deep drawing process, a cylindrical member without a joint can be obtained so that a run flat tire supporting member without a joint can be shaped.

A production method for a run flat tire supporting member of the invention according to a second aspect is a production method for a run flat tire supporting member capable of supporting a load when run flat running comprising; shaping a cylindrical member having a bottom part out of a flat plate metal material by deep drawing process, curving the cylindrical member into a shape comprising a projecting part with the axial direction middle part of the cylindrical member projecting to the outside in the radial direction, and removing an opening part side and the bottom part side of the cylindrical member curved into a shape comprising the projecting part.

According to this production method for a run flat tire supporting member of the invention, a run flat tire supporting member is shaped by shaping a cylindrical member having a bottom part out of a flat plate metal material by deep drawing process, curving the cylindrical member into a shape comprising a projecting part with the axial direction middle part of the cylindrical member projecting to the outside in the radial direction, and removing the opening part side and the bottom part side of the cylindrical member curved into a shape comprising the projecting part. Accordingly, by removing the opening part side and the bottom part side of the cylindrical member after the deep drawing process, a jointless cylindrical member can be obtained so that a jointless run flat tire supporting member can be shaped.

In a preferred production method for a run flat tire supporting member of the invention, the curving to shape the cylindrical member further comprises inserting ; the cylindrical member into an inner circumferential side of a cylindrical shaping mold having an inner circumferential surface comprising a surface shape corresponding to the projecting part, filling an inner circumferential side of the cylindrical member with a liquid, pressurizing the liquid, and curving the cylindrical member by the liquid pressure to conform to the shaping surface.

According to this preferred production method, particularly in the case of using the cylindrical member as the shaping material of the supporting member, that is by forming the projecting part with the axial direction middle part projecting to the outside in the radial direction in the cylindrical member by the liquid pressure, leakage of the liquid provided to the inner circumferential side of the cylindrical member from the bottom surface side of the cylindrical member can be inhibited certainly at the time of pressurizing with a liquid, and thus a sealing work for the liquid provided in the cylindrical member or a sealing structure in the device for shaping the projecting part in the supporting member can be simplified.

In a further preferred production method for a run flat tire supporting member of the invention, the curving to shape the cylindrical member further comprises: providing the liquid sealed in an elastic bag member on the inner circumferential side of the cylindrical member, and pressurizing the liquid together with the bag member so as to apply the liquid pressure onto the cylindrical member via the bag member.

In a yet further preferred production method for a run flat tire supporting member of the invention, the bulge pressure P is set in a calculation value of formula (1) in the shaping with a value selected as a constant K in a range of 1.5 to 20:

$$P = K \times S \times T \ldots \text{Formula (1)}$$

wherein the bulge pressure as the maximum value of the liquid pressure to be applied to the cylindrical member by the liquid filled on the inner circumferential side of the cylindrical member is P (Kgf/mm$^2$), the thickness of the cylindrical member is T (mm), the tensile strength of the metal material comprising the cylindrical member is S (Kgf/mm$^2$), and the constant for determining the bulge pressure P is K (where K is a positive real number).

A run flat tire supporting member obtained by the method of the invention is a run flat tire supporting member capable of supporting a load when run flat running comprises a projecting part projecting to the outside in the radial direction which is formed by curving an axial direction middle part of a jointless cylindrical member.

According to the run flat tire supporting member obtained by the method of the invention, since a projecting part projecting to the outside in the radial direction is formed by curving the axial direction middle part of a jointless cylindrical member, a run flat tire supporting member without a joint can be provided. Therefore, the strength on the circumference of the run flat tire supporting member can be even so that unnatural deformation or rupture cannot be generated in an ordinary run flat running even without a firm welding required for a run flat tire supporting member with a joint.

A pneumatic run flat tire obtained by a preferred method of the invention comprises: a tire comprising a toroidal carcass spanning between a pair of bead cores, a side rubber layer configuring a tire side part and disposed on the outside in a tire axial direction of the carcass, and a tread rubber layer configuring a tread part and disposed on the outside in a tire radial direction of the carcass, a tire size mounting rim for mounting the tire, and a supporting member disposed on the inside of the tire so as to be assembled on the rim together with the tire. The run flat tire supporting member is a run flat tire supporting member produced according to the preferred method of paragraph [0010] above.

According to the pneumatic run flat tire obtained by such a method, at the time the internal pressure of the pneumatic tire is lowered, run flat running is enabled by supporting the tread part by the supporting member disposed inside the pneumatic tire instead of the side rubber layer. When run flat running, the shock from the road surface is transmitted to the car body via the tread part, the supporting member and the rim. Accordingly, although the load and the vibration are applied to the run flat tire supporting member when run flat running, since the jointless run flat tire supporting member is used, the strength on the circumference of the run flat tire supporting member can be even so that unnatural deformation or rupture cannot be generated in an ordinary run flat running even without a firm welding required for a run flat tire supporting member with a joint.

Moreover, a particular preferred production method for a run flat tire supporting member of the invention is a production method for producing a ring shaped run flat tire supporting member to be disposed inside a pneumatic tire so as to be assembled onto a rim together with the pneumatic tire and comprises: inserting a metal cylindrical member as the shaping material for the supporting member into a hollow part provided on an inner circumferential side of a pressure shaping part in the ring form shaping mold, the pressure shaping part configuring a surface shape corresponding to a radial direction cross sectional shape of the supporting member and is formed on the inner circumferential side of the ring form shaping mold, inserting a bag member made of an elastic and stretchable membrane material and filled inside with a liquid into the hollow part on an inner circumferential side of the cylindrical member, pressurizing the liquid in the bag member with a pressuring part so as to apply the liquid pressure to the cylindrical member via the bag member, plastically deforming the cylindrical member to conform to the pressure shaping part, wherein, so as to set the bulge pressure P in a calculation value of formula (1) in the shaping with a value selected as a constant K is in a range of 1.5 to 20:

$$P = K \times S \times T \ldots \text{Formula (1)}$$

wherein the bulge pressure as the maximum value of the liquid pressure to be applied to the cylindrical member by the liquid filled on the inner circumferential side of the cylindrical member is P (Kgf/mm$^2$), the thickness of the cylindrical member is T (mm), the tensile strength of the metal material comprising the cylindrical member is S (Kgf/mm$^2$), and the constant for determining the bulge pressure P is K (where K is a positive real number).

According to this preferred production method for a run flat tire supporting member of the invention, particularly in the case a high strength metal material such as a high tension steel, stainless steel or a ultra high tension steel is used as the material for the cylindrical member, by controlling the bulge pressure P to be applied to the cylindrical member to a calculation value of (K × S × T) by the pressurizing means, the cylindrical member can be plastically deformed accurately to conform to the shape of the pressure shaping part so as to stably produce a supporting member having desired size accuracy and mechanical performance so that deterioration of the mechanical characteristics due to generation of excessive distortion of the supporting member can be prevented.

Since the cylindrical member can be plastically deformed to conform to the pressure shaping part in the shaping mold without contacting the liquid with the cylindrical member, adhesion of the liquid to the supporting member shaped from the cylindrical member (hydro form shaping) can be completely prevented, and thus generation of rust or chemical change on the supporting member surface by the influence of the adhered liquid can be prevented.

Moreover, since a production device for shaping a supporting member, which has an appropriate output for a pressure shaping or the like can be selected accurately, increase of the production cost of the supporting member can be restrained effectively without selecting a device having an output higher than the required level.

As heretofore explained, according to a production method for a run flat tire supporting member of the invention, a run flat tire supporting member and a pneumatic run flat tire can be produced so that an excellent effect of providing a run flat tire supporting member without a joint and a pneumatic run flat tire comprising the run flat tire supporting member can be provided.

The invention will be further described with reference to one accompanying drawings, wherein

FIG 1 is an end view taken along the tire rotation axis at the time of mounting a rim of a pneumatic run flat tire according to a first embodiment of the invention (only the upper side portion out of the end face along the tire rotation axis O is shown).

FIG 2 is a perspective view of the supporting member, taken along the tire rotation axis O of FIG 1 according to the embodiment of the invention.

FIG 3 is a schematic cross sectional view showing a deep drawing process with a punch and a dice in the production method for a supporting member according to the first embodiment of the invention.

FIG 4 is a perspective view of a cylindrical member shaped by the deep drawing process in the production method for a supporting member according to the first embodiment of the invention.

FIGS. 5(A)(B)(C) are diagrams showing the production stages in the production method for a supporting member according to the first embodiment of the present invention, wherein (A) is a perspective view showing a cylindrical member shaped by the deep drawing process. (B) is a perspective view showing a cylindrical member with the opening part side and the bottom part side cut off by the cutting process, and (C) is a perspective view showing a shell (supporting member) shaped by the curving process.

FIGS. 6(A)(B) are diagrams showing the configuration of a pressure shaping device for producing a shell (supporting member) by the hydro form process in the production method for a supporting member according to the first embodiment of the invention, wherein (A) is a cross sectional view showing the device state before starting the hydro form process of the shell (supporting member), and (B) is a cross sectional view showing the device state during the hydro form process of the shell (supporting member).

FIGS. 7(A)(B)(C) are diagrams showing the production stages in the production method for a supporting member according to a second embodiment of the invention, wherein (A) is a perspective view showing a cylindrical member shaped by the deep drawing process. (B) is a perspective view showing a cylindrical member with the opening part side and the bottom part side cut off by the cutting process, and (C) is a perspective view showing a shell (supporting member) shaped by the curving process.

FIGS. 8(A)(B) are diagrams showing the configuration of a pressure shaping device for producing a shell (supporting member) by the hydro form process in the production method for a supporting member according to the second embodiment of the invention, wherein (A) is a cross sectional view showing the device state before starting the hydro form process of the shell (supporting member), and (B) is a cross sectional view showing the device state during the hydro form process of the shell (supporting member).

FIG 9 is a schematic cross sectional view showing a deep drawing process with a punch and a liquid pressure in the production method for a supporting member according to a third embodiment of the invention.

FIG 10 is a perspective view showing the configuration of a pressure shaping device according to the second embodiment of the invention.

FIGS. 11(A)(B) are cross sectional views showing the configuration of the pressure shaping device shown in FIG 1, each showing the device state of the supporting ring before starting the hydro form shaping and during the hydro form shaping.

FIGS. 12(A)(B) are perspective views showing a supporting ring hydro form shaped by a pressure shaping device according to a fourth embodiment of the invention.

FIGS. 13(A)(B) are diagrams showing the production process for a supporting member according to a comparative example, wherein (A) is a perspective view showing a cylindrical member obtained by welding the both end parts of a ring shaped material, and (B) is a perspective view showing a shell (supporting member) shaped from the cylindrical member of FIG 8(A).

The inventive production method for a run flat tire supporting member will be explained with reference to the drawings.

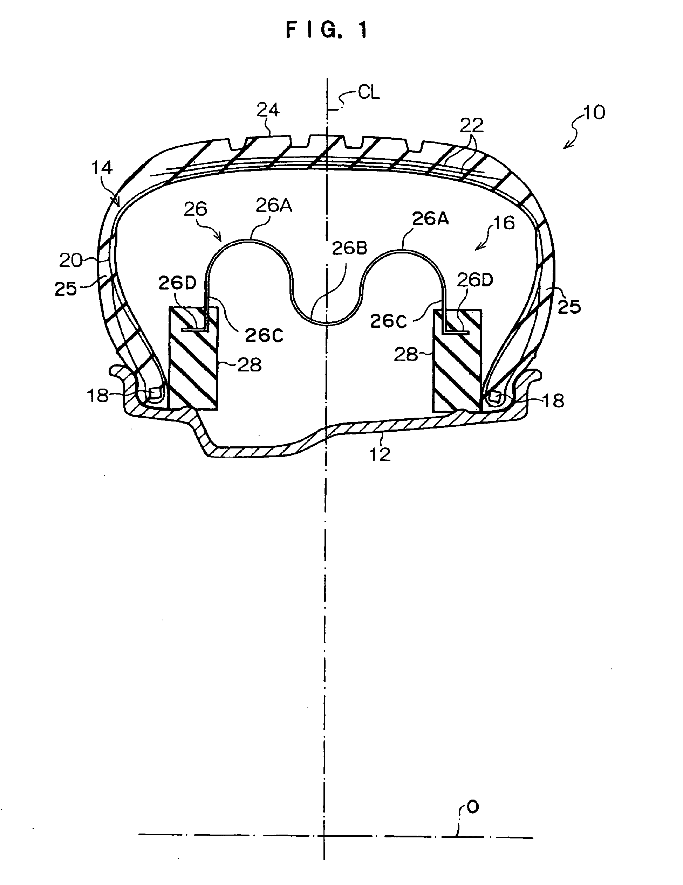

As shown in FIG 1, a run flat tire 10 comprises a pneumatic tire 14 and a supporting member 16 assembled onto a common wheel rim 12.

As shown in FIG 1, the rim 12 for assembling the supporting member 16 is a standard rim corresponding to the size of the pneumatic tire 14. The pneumatic tire 14 according to this embodiment comprises a pair of bead parts 18, a toroidal carcass 20 extending between the bead parts 18, a plurality of (in this embodiment, two) belt layers 22 disposed on the crown part of the carcass 20, a tread part 24 formed in the upper part of the belt layers 22, and a tire side part 25 provided by covering the tire axial direction outer side of the carcass 20 with a rubber layer. Although the tire shown in this embodiment has a common tire shape, the invention can be adopted for various kinds of tire shapes.

In the figure, "O" represents the tire rotation axis, and "CL" represents the center in the tire width direction at the tire equatorial plane and is extended as perpendicular to the rotation axis O.

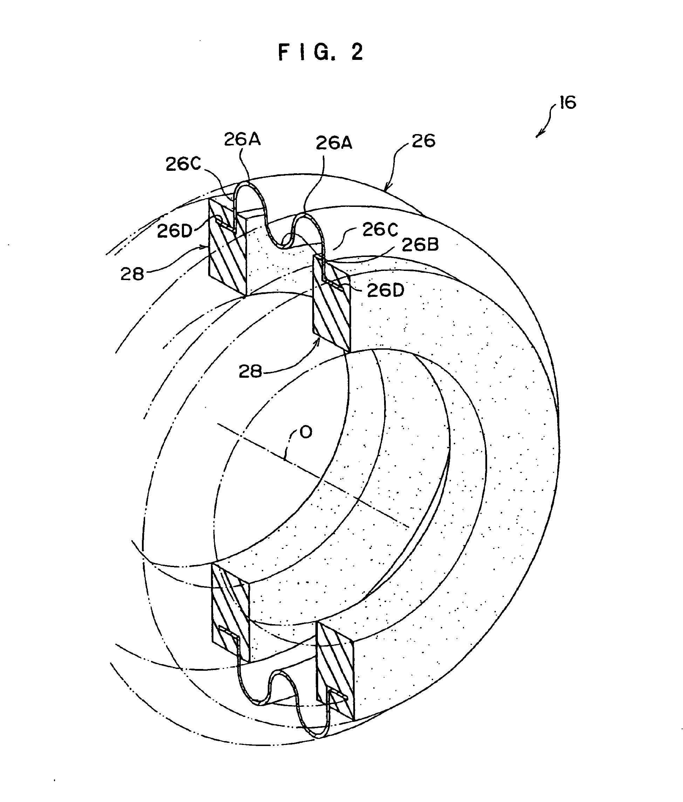

FIG 2 shows a perspective view in the radial direction half cross section cut out on the cross section along the rotation axis O of the supporting member 16 to be used for the run flat tire 10. The supporting member 16 to be disposed in the inside of the pneumatic tire 14 (see FIG 1) formed like a ring as a whole as shown in FIG 2 comprises a shell 26 as a ring shaped supporting member and vulcanized rubber leg parts 28 bonded on each of both end parts of the shell 26.

The leg part 28 provided as an elastic member is ring shaped in the longitudinal direction and substantially rectangular in the cross sectional shape along the rotation axis O perpendicular to the longitudinal direction. As shown in FIG 1, the leg parts 28 are assembled onto the outer circumference of the rim 12 on the inner side of the pneumatic tire 14 at the time of assembling the rim of the supporting member 16 utilizing the rubber elasticity.

On the other hand, the shell 26 is formed with a thin plate having the cross sectional shape shown in FIG 1 like a ring (ring shaped) as shown in FIG 2. The shell 26 has convex parts 26A as projecting parts projecting to the outside in the radial direction, a concave part 26B projecting inside in the radial direction formed therebetween, and furthermore side parts 26C for supporting the load to the outside in the width direction of the convex part 26A (opposite side to the concave part 26B) formed integrally. Cylindrical flange parts 26D extending substantially in the tire rotation axis direction are formed inside portion in the radial direction of the side parts 26C (rim side portion), respectively.

Next, the production method for the shell 26 in the run flat tire 10 provided as mentioned above will be explained.

The shell 26 is formed integrally with a metal material. As the metal material for the shell 26, an aluminium based, iron based, magnesium based or titanium based metal material can be used. Here, "based" is a concept that the material includes the metal as a base alloy, a material produced by plating the metal, a material produced by plating a metal provided the metal as the base alloy, or the like in addition to the metal itself. For example, in the case of "iron based", in addition to iron itself, a carbon steel, and an iron-zinc alloy, furthermore a zinc plated steel plate; a steel plate plated with an iron-zinc alloy, or the like are included.

In the case of using an aluminum based material, from the viewpoint of the strength and the shaping property, the aluminium alloys of the alloy number 5,000 series, 6,000 series and 7,000 series defined in JIS are preferable. Moreover, in the case of using a high tension steel as the iron based material, from the viewpoint of the shaping property, those having a tensile strength of 380 N/mm$^2$ or less are preferable.

- Deep drawing process -

The deep drawing process is a process of shaping a cylindrical member having a bottom part out of a flat plate like metal material by the deep drawing process.

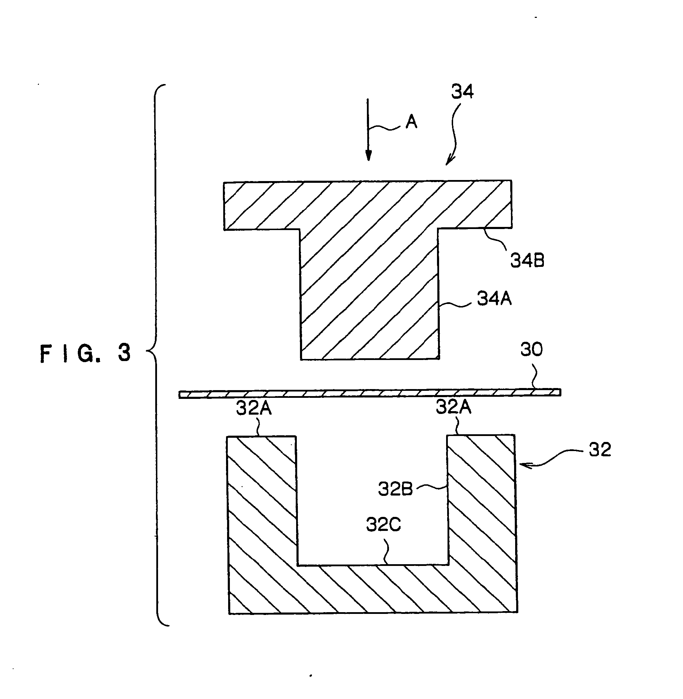

FIG 3 shows the state of forming a cylindrical member having a bottom part by the deep drawing process. As shown in FIG 3, a flat plate like metal plate 30 is used as the metal material. At the time of the deep drawing process, the metal plate 30 is placed on a dice surface 32A of a dice 32 as the fixed side mold. In the dice 32, a columnar hole 32B having the bottom is formed so as to provide the hole 32B as the female mold. From centrally above the metal plate 30 placed on the dice surface 32A, a punch 34 as the moving side mold is pressed down in the arrow A direction. The punch 34 comprises a columnar convex part 34A as the male mold. A protruding part 34B is formed on the upper side of the convex part 34A in the figure.

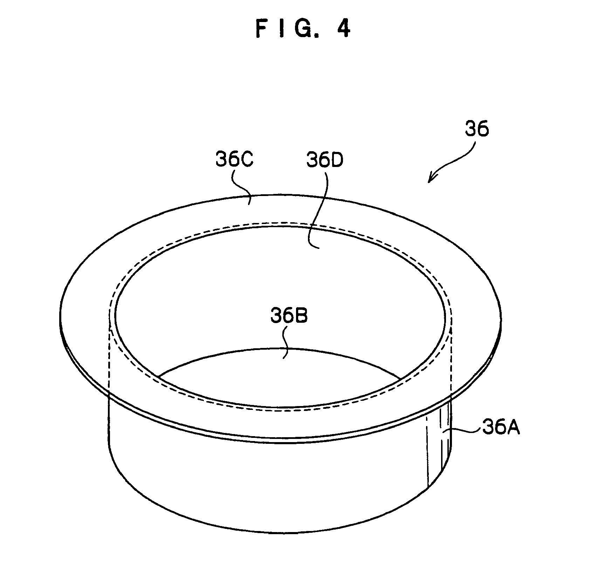

By pressing down the punch 34 so as to push the convex part 34A into the hole 32B, the metal plate 30 portion initially on the dice surface 32A is drawn cylindrically so as to be processed by the deep drawing shaping. When the convex part 34A is pushed to a predetermined depth, the convex part 34A is contacted with the bottom surface 32C of the hole 32B via the metal plate 30 so that the metal plate 30 becomes a cylindrical member 36 having the bottom plate part 36B as shown in FIG 4. Since the end part of the metal plate 30 shown in FIG 3 is clamped between the punch protruding part 34B and the dice surface 32A, as shown in FIG 4, the metal plate 30 becomes a bottomed cylindrical member 36 having a flange part 36C on the opening part 36D side.

Here, the cylindrical part 36A of the cylindrical member 36 shown in FIG 4 is the portion with the metal plate 30 drawn cylindrically as shown in FIG 3, and the bottom plate part 36B of the cylindrical member 36 shown in FIG 4 is a portion formed by being clamped between the punch convex part 34A and the dice bottom surface 32C shown in FIG 3. Moreover, the flange part 36C of the cylindrical member 36 shown in FIG 4 is a portion formed by being clamped between the punch protruding part 34B and the dice surface 32A as shown in FIG 3.

As to the deep drawing process shown in FIG 3, a wrinkle pressing member may be disposed for pressing the metal plate 30 at a position facing the dice surface 32A via the metal plate 30 so as to prevent wrinkle generation at the time of the deep drawing process. Moreover, as shown in FIG 3, it is not limited to the case of shaping the cylindrical member 36 by one drawing process with a pair of the dice 32 and the punch 34 (see FIG 4), and the drawing process may be carried out two or more times (two processes) for shaping a desired cylindrical member 36 by the re-drawing process.

- Cutting process -

The cutting process is a process for removing the opening part side and the bottom part side of the cylindrical member.

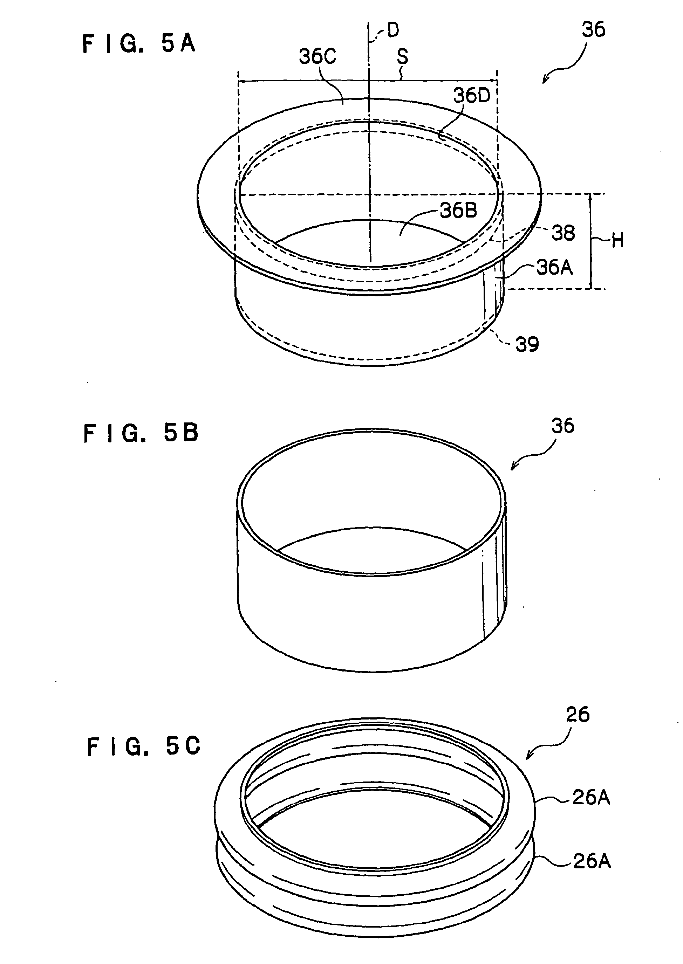

FIG 5(A) shows the cylindrical member 36 shaped by the deep drawing process. The surfaces perpendicular to the central axis D of the cylindrical member 36 on the opening part 36D side (upper part in the figure) and the bottom plate part 36B side (lower part in the figure) of the cylindrical member 36, that is the surfaces along the dot lines 38, 39 are cut by a cutting means such as a laser cutter. Thereby, a thin pipe like cylindrical member 36 as shown in FIG 5(B) can be obtained. The cylindrical member 36 has a material structure provided integrally continuously over the entire circumference without a joint.

- Curving process -

The curving process is a process for curving the cylindrical member into a shape comprising a projecting part with the axial direction middle part of the cylindrical member projecting to the outside in the radial direction.

In this process, a shell 26 comprising two convex parts 26A with the axial direction middle part projecting to the outside in the radial direction as shown in FIG 5(C) from the cylindrical member 36 as shown in FIG 5(B) by a method such as the hydro form process and the spatula drawing process (spinning process).

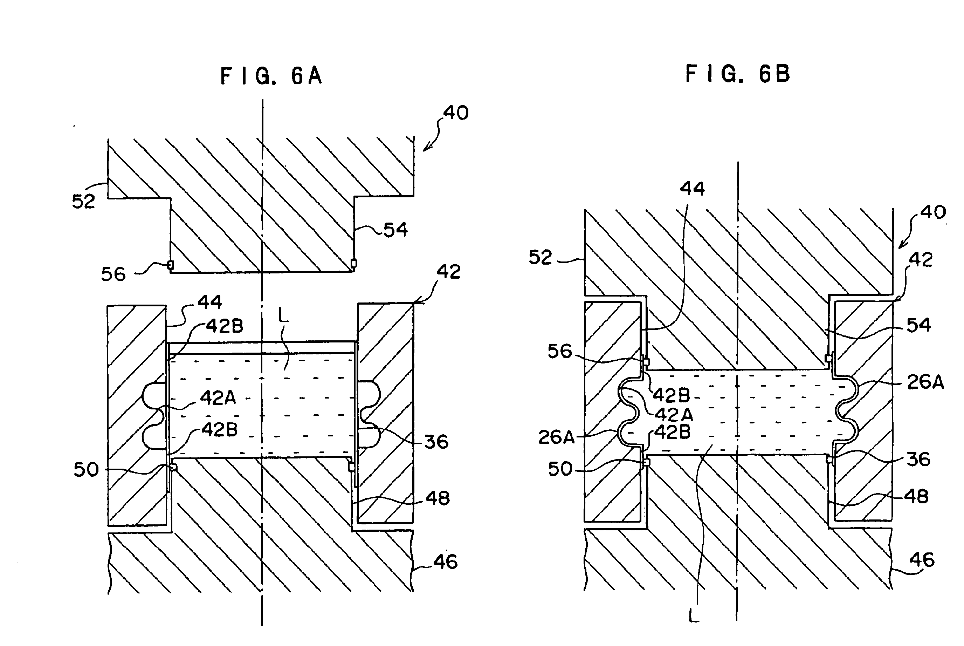

FIG 6 shows a pressure shaping device 40 for producing the shell 26 by the hydro form process. The pressure shaping device 40 is for shaping the shell 26 shown in FIG 5(C) with the thin pipe like cylindrical member 36 shown in FIG 5(B) provided as the shaping material.

The pressure shaping device 40 is provided with a thick cylindrical shaping mold 42 such that the shaping mold 42 comprises a pressure shaping part 42A having a surface shape corresponding to the shape of the shell 26 (see FIG 5(C)) in the inner circumferential surface. The cylindrical member 36 is inserted into the hollow part 44 of the shaping mold 42 as shown in FIG 6(A) so that the outer circumferential surface of the cylindrical member 36 is closely contacted with the inner circumferential surface of the shaping mold 42 (both side parts 42B of the pressure shaping part 42A).

The pressure shaping device 40 has a fixed base 46 disposed below the shaping mold 42 such that a fixed plunger 48 is projected from the upper surface part of the fixed base 46. The fixed plunger 48 is fitted on the inner circumferential side of the cylindrical member 36 in the hollow part 44. A rubber seal ring 50 is mounted on the outer circumferential surface top end part of the fixed plunger 48 for sealing the gap with respect to the cylindrical member 36 inner circumferential surface. Thereby, the opening on the lower part side of the cylindrical member 36 can be sealed. In this state, the inside of the hollow part 44 is filled with a liquid L such as water and oil.

Moreover, in the pressure shaping device 40, an elevating base 52 movable along the height direction (in the upper and lower direction in the figure) is disposed above the shaping mold 42. A pressure plunger 54 is projected from the lower surface part of the elevating base 52. A rubber seal ring 56 is mounted also on the outer circumferential surface top end part of the pressure plunger 54 for sealing the gap with respect to the cylindrical member 36 inner circumferential surface.

At the time of shaping the shell 26 out of the cylindrical member 36 (see FIG 5(C)), the elevating base 52 at the waiting position as shown in the FIG 6(A) is lowered so that the pressure plunger 54 is inserted into the inner circumferential side of the cylindrical member 36 in the hollow part 44. Thereby, the upper part side opening of the cylindrical member 36 is sealed and also the liquid L filling the inside of the cylindrical member 36 is compressed so as to raise the liquid pressure. The pressure plunger 54 is lowered to the pressure position shown in FIG 6(B) so as to pressure the liquid L inside the cylindrical member 36 to a predetermined pressure. The cylindrical member 36 with the pressure applied has the axial direction middle part deformed plastically to conform to the pressure shaping part 42A so that two convex parts 26A, 26A projecting to the outside in the radial direction (outer circumferential side) are formed in the axial direction middle part of the cylindrical member 36.

On the other hand, in the case of shaping the shell 26 as shown in FIG 5(C) out of the cylindrical member 36 as shown in FIG 5(B) by the spatula drawing process (spinning process), with the cylindrical member 36 mounted on the outer circumference of the shaping mold mounted on the principal axis of the spatula drawing disc (not shown), the cylindrical member 36 is rotated together with the shaping mold for shaping by pressing a spatula onto the outer circumference of the cylindrical member 36 by a worker until it is fitted to the surface of the shaping mold. In the shaping mold used for the spatula process, a projecting part (in this embodiment, two convex parts) is formed projecting to the outside in the radial direction in the axial direction middle part as the shell 26 as the completed product.

Next, the function of the shell 26 produced as mentioned above and the run flat tire 10 comprising the shell 26 will be explained.

According to the run flat tire 10 shown in FIG 1, in the case the internal pressure of the pneumatic tire 14 is lowered, the running operation is carried out with the tread part 24 of the pneumatic tire 14 supported by the convex part 26A of the supporting member 16. At the time, the shock from the road surface is transmitted to the car body via the tread part 24, the supporting member 16 and the rim 12. Accordingly, the load and the vibration are applied to the shell 26 of the supporting member 16 when run flat running, however, in this embodiment, since the shell 26 without a joint is used, the strength on the circumference of the shell 26 can be even so that unnatural deformation or rupture cannot be generated in an ordinary run flat running even without a firm welding required for a shell with a joint.

The production method for a supporting member according to the second embodiment of the invention will be explained with reference to the drawings.

- Deep drawing process -

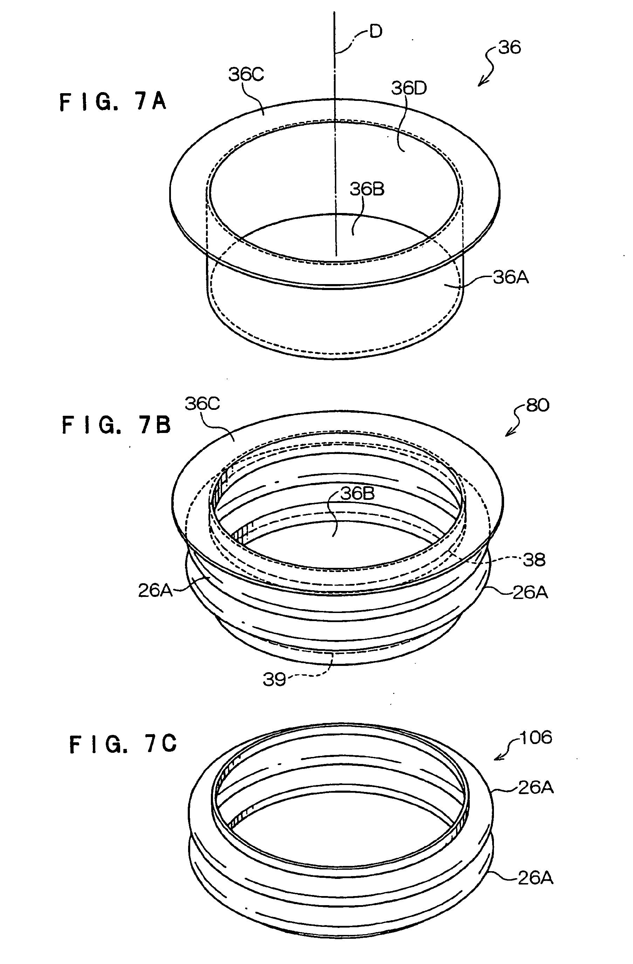

According to the production method for a supporting member according to this embodiment, as in the case of the first embodiment, the cylindrical member 36 shown in FIG 7(A) is shaped by the deep drawing process of the metal plate 30 (see FIG 3). Since the shaping method and the shape of the cylindrical member 36 are basically same as in the case of the first embodiment, explanation is omitted.

- Curving process -

The curving process is a process for shaping a cylindrical member 80 comprising two convex parts 26A, 26A by curving two points in the axial direction middle part of the cylindrical member 36 so as to be projected to the outer circumference side by the hydro form process.

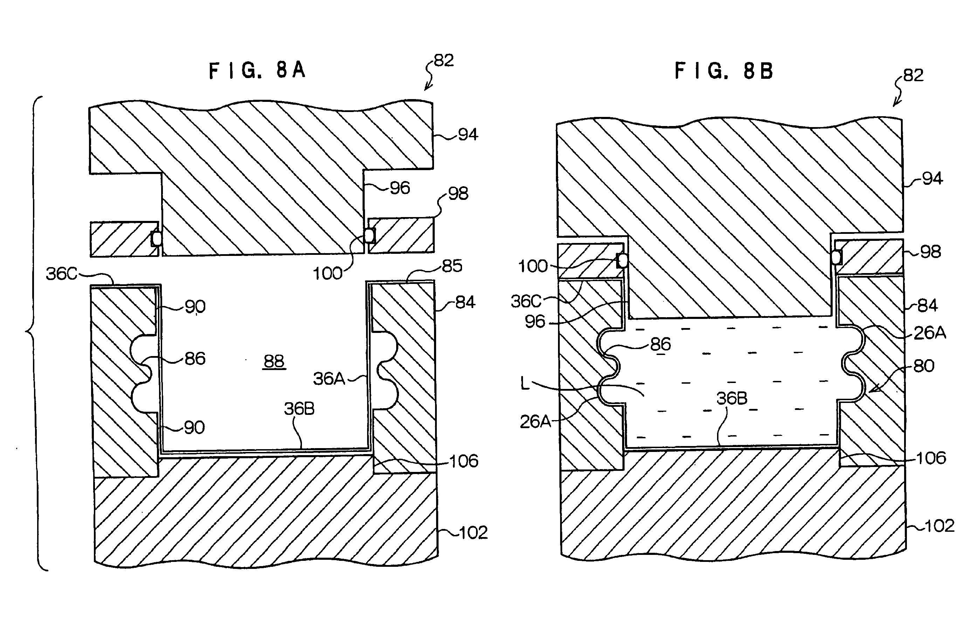

FIG 8 shows a pressure shaping device 82 for shaping the cylindrical member 36 comprising the bottom plate part 36B and the flange part 36C into the cylindrical member 80 comprising the two convex parts 26A, 26A by the hydro form process. The pressure shaping device 82 is for shaping the cylindrical member 80 comprising the two convex parts 26A, 26A shown in FIG 7(C) with the cylindrical member 36 comprising the bottom plate part 36B and the flange part 36C shown in FIG 7(B) as the shaping material.

As shown in FIG 8, the pressure shaping device 82 is provided with a thick cylindrical shaping mold 84 such that the shaping mold 84 comprises a pressure shaping part 86 having the surface shape corresponding to the shape of the two convex parts 26A, 26A in the inner circumferential surface. The cylindrical member 36 comprising the bottom plate part 36B and the flange part 36C is inserted into the hollow part 88 of the shaping mold 84 as shown in FIG 8(A) so that the outer circumferential surface of the cylindrical member 36 is closely contacted with the inner circumferential surface of the shaping mold 84 (both side parts 90 of the pressure shaping part 86).

The pressure shaping device 82 has a fixed base 102 disposed below the shaping mold 84 such that a fixed plunger 104 is projected from the upper surface part of the fixed base 102. The fixed plunger 104 has the upper surface part thereof contacted with the bottom surface part of the cylindrical member 36 inserted into the hollow part 88. In this state, the inside of the cylindrical member 36 is filled with a liquid L such as water and oil.

In the pressure shaping device 82, an elevating base 94 movable along the height direction (in the upper and lower direction in the figure) by a hydraulic cylinder, or the like is disposed above the shaping mold 84. A pressure plunger 96 is projected from the lower surface part of the elevating base 94. Moreover, a ring like seal pressing member 98 is disposed on the outer circumferential side of the pressure plunger 96 in the pressure shaping device 82 such that the seal pressing member 98 can be moved along the height direction by a hydraulic cylinder, or the like. A rubber seal ring 100 is mounted on the inner circumferential surface of the seal pressing member 98 for sealing the gap with respect to the pressure plunger 96.

At the time of shaping the cylindrical member 80 comprising the two convex parts 26A, 26A out of the cylindrical member 36 (see FIG 7(B)), first the seal pressing member 98 at the waiting position shown in FIG 8(A) is lowered so that the seal pressing member 98 is contacted with pressure with the flange part 36C of the cylindrical member 80 placed on the upper surface part 85 of the shaping mold 84. The seal pressing member 98 is pressed against the flange part 36C supported by the upper surface part 85 of the shaping mold 84 from below with a sufficiently large pressing force. Thereby, leakage of the liquid L from between the flange part 36C and the seal pressing member 98 can certainly be prevented.

Then, the elevating base 94 is lowered so that the pressure plunger 96 is inserted into the inner circumferential side of the cylindrical member 36 in the hollow part 88. Thereby, the upper part side opening of the cylindrical member 36 is sealed and also the liquid L filling the inside of the cylindrical member 36 is compressed so as to raise the liquid pressure. The pressure plunger 96 is lowered to the pressure position shown in FIG 8(B) so as to pressure the liquid L inside the cylindrical member 36 to a predetermined pressure. The cylindrical member 36 with the pressure applied has the axial direction middle part deformed plastically to conform to the pressure shaping part 86 to the outer circumferential side. Thereby, the axial direction middle part of the cylindrical member 36 is curved so as to be projected to the outer circumferential side so that the cylindrical member 80 comprising two convex parts 26A, 26A projecting to the outside in the radial direction (outer circumferential side) can be formed.

- Cutting process -

The cutting process is a process for removing the opening part side and the bottom part side of the cylindrical member 80 comprising the two convex parts 26A, 26A.

The surfaces perpendicular to the central axis D of the cylindrical member 36 on the opening part 36D side (upper part in the figure) and the bottom plate part 36B side (lower part in the figure) of the cylindrical member 80 shown in FIG 7(B), that is, the surfaces to conform to the dot lines 38, 39 are cut by a cutting means such as a laser cutter. Thereby, a shell 106 as shown in FIG 7(C) can be produced. The shell 106 has the same shape as the shell 26 obtained by the production method according to the first embodiment.

Next, the function of the production method for a supporting member according to the second embodiment as mentioned above will be explained.

According to the production method for a supporting member according to this embodiment, like the production method for a supporting member according to the first embodiment, a cylindrical member 80 without a joint can be obtained, and the cylindrical member 80 without a joint can be shaped into the shell 106.

By forming the two convex parts 26A, 26A with the axial direction middle part projecting to the outside in the radial direction in the cylindrical member 36 by the hydro form process without removing the opening part side and the bottom part side from the cylindrical member 36 after the deep drawing process, compared with the production method of the first embodiment, since the leakage of the liquid L filled to the inner circumferential side of the cylindrical member 36 from the bottom surface side of the cylindrical member 36 can certainly be inhibited at the time of the hydro form process, the sealing work for the liquid L filling the inside of the cylindrical member 36 at the time of the hydro form process and the seal structure of the pressure shaping device 82 can be simplified.

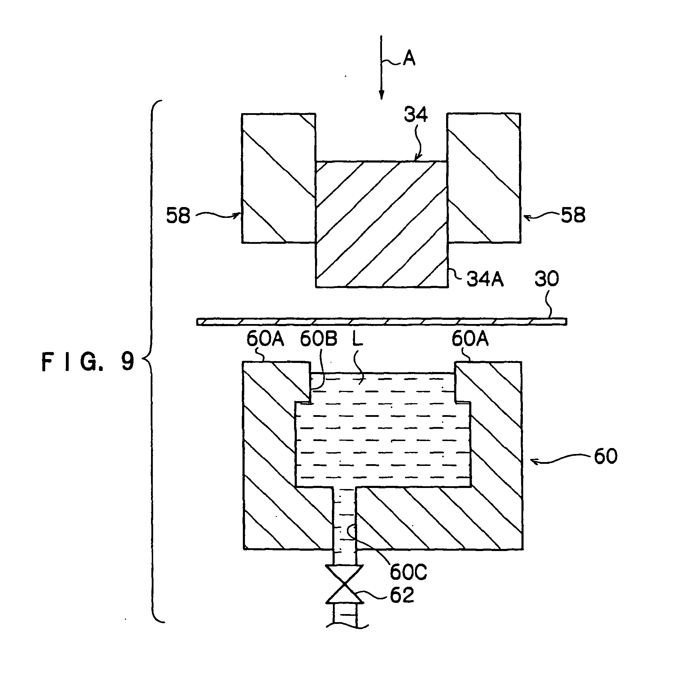

The third embodiment of the production method for a shell (supporting member) will be explained with reference to FIG 9. In the first embodiment, as shown in FIG 3, the case of the deep drawing process of the metal plate 30 by pushing down the punch 34 has been explained, and the third embodiment is an embodiment of the deep drawing process of the metal plate 30 by applying a liquid pressure. It is characteristic of the configuration of the production method for a shell according to the third embodiment that the liquid pressure is used instead of the dice 32, and since the other configuration is substantially the same as the configuration of the first embodiment, the same numerals are applied and the explanation is omitted.

As shown in FIG 9, a pressing member 58 for pressing and supporting the circumference of the metal plate 30 is provided in the circumference of the punch 34 (in the figure, the right and left sides). A liquid pressure vessel 60 is disposed at a position facing the punch 34 and the pressing member 58 via the metal plate 30. The opening upper surface of the liquid pressure vessel 60 is provided as the supporting surface 60A so as to clamp the metal plate 30 with respect to the pressing member 58 at the time of the deep drawing process. A liquid pressure chamber 60B of a substantially columnar shape is formed corresponding to the punch convex part 34A in the central part of the liquid pressure vessel 60. The inside of the liquid pressure chamber 60B is filled with a liquid L such as water and oil. A conduit 60C is formed in the bottom surface of the liquid pressure chamber 60B such that the conduit 60C is connected with a pump 62 outside the liquid pressure vessel 60. The pump 62 is for adjusting the liquid pressure of the liquid L.

At the time of the cylindrical deep drawing process of the metal plate 30, first, the metal plate 30 is placed on the supporting surface 60A so that the circumference of the metal plate 30 is pressed and supported by the pressing member 58. Next, the punch 34 is lowered so as to push the metal plate 30 into the liquid pressure chamber 60B side. At the time, the liquid pressure of the liquid L in the liquid pressure chamber 60B is adjusted by the pump 62. Since the metal plate 30 is pressured on the outer circumferential surface of the punch 34 by the liquid pressure in the liquid pressure chamber 60B, it is shaped along the outer circumferential shape of the punch 34. Thereby, the metal plate 30 becomes a cylindrical member 36 without a joint as shown in FIG 5(A). The method for processing the shaped cylindrical member 36 to the shell 26 shown in FIG 5(C) thereafter is same as that in the first embodiment or the second embodiment.

According to the shaping method using a liquid pressure to one of the molds as the method of this embodiment (counter liquid pressure method) or the method of using the liquid pressure instead of the punch 34 as shown in FIG 3, since one of the molds is a commonly used mold (a mold without the need of having the mold shape corresponding to the other mold), the mold can be simplified. Although the liquid pressure is applied directly to the metal plate 30 in this embodiment, the liquid pressure may be applied to the metal plate 30 via a rubber film, or the like.

Next, the configuration of a pressure shaping device 134 for producing the shell 26 of the supporting member 16 according to this embodiment will be explained.

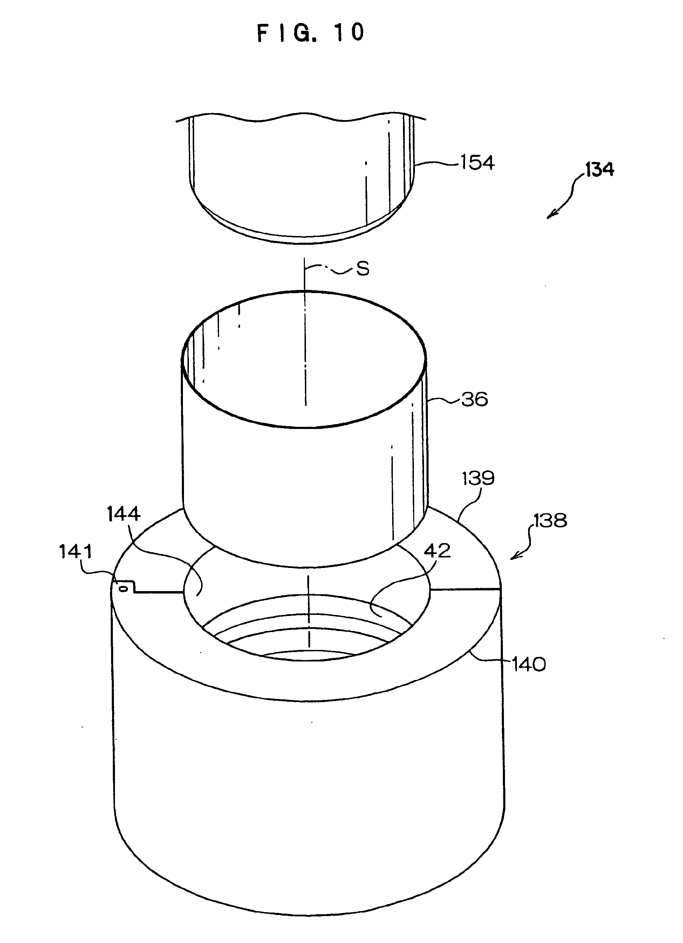

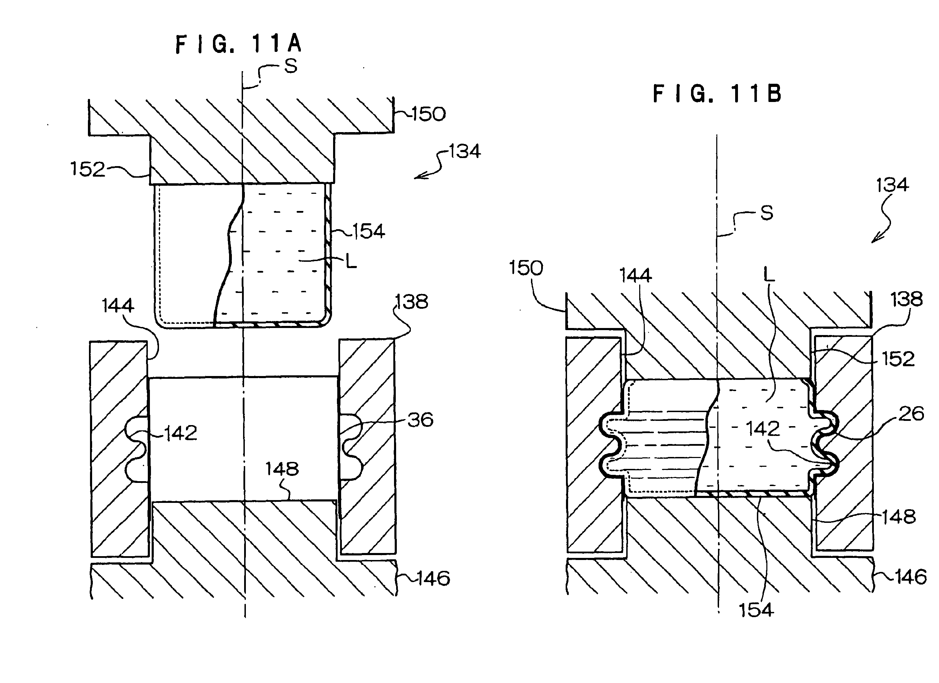

FIGS. 10 and 11 show an example of the pressure shaping device 134 according to an embodiment of the invention. The pressure shaping device 134 is for the hydro form shaping of the shell 26 of the supporting member 16 using the cylindrical member 36 produced via the common process as in the case of the first embodiment as the shaping material.

As shown in FIG 10, the pressure shaping device 134 is provided with a shaping mold 138 formed as a thick cylinder as a whole. The shaping mold 138 has a structure split in two by a split mold 139 and a split mold 140 along the radial direction around the axis center S such that one end parts of the split molds 139, 140 are interlocked via a hinge part 141. Thereby, the split molds 139, 140 comprising the shaping mold 138 can be separated and combined around the hinge part 141. Here, the split molds 139, 140 of the shaping mold 138 are interlocked with a switching mechanism (not shown). The switching mechanism supports the split molds 139, 140 at the shaping position shown in FIG 10 at the time of the hydro form shaping, and it moves the split molds 139, 140 to the open position so as to be separated from each other at the time of taking out the shaped shell 26 from the shaping mold 138.

As shown in FIG 11, the shaping mold 138 has the inner circumferential surface with a surface shape corresponding to the radial direction cross section of the shell 26 such that a concave pressure shaping part 142 corresponding to the cross sectional shape of the convex part 26A and the concave part 26B of the shell 26 is formed in the axial direction middle part in the inner circumferential surface. Moreover, the space on the inner circumferential side of the pressure shaping part 142 in the shaping mold 138 is provided as a hollow part 144 for having the cylindrical member 36 as the shaping material for the shell 26 inserted.

According to this embodiment, the cylindrical member 36 is made of a metal material such as a high tension steel, a stainless steel and a ultra high tension steel into a thin cylindrical shape having a constant diameter corresponding to the maximum diameter of the shell 26. Specifically, the cylindrical member 36 is made of for example a high tension steel of 50 Kgf/mm$^2$ or more tensile strength with a thickness of about 0.8 mm to 1.8 mm. As shown in FIG 11(A), the cylindrical member 36 is inserted into the hollow part 144 of the shaping mold 138 so that the outer circumferential surface thereof is set in a state closely contacted with the inner circumferential surface of the shaping mold 138.

As shown in FIG. 11(A), the pressure shaping device 134 has a fixed base 146 disposed below the shaping mold 138 such that a fixed plunger 148 is projected from the upper surface part of the fixed base 146. The fixed plunger 148 has an outer diameter slightly smaller than the inner diameter of the cylindrical member 36. At the time of starting the hydro form shaping, as shown in FIG 11(A), the shaping mold 138 is placed on the upper surface part of the fixed base 146. The fixed plunger 148 is fitted on the inner circumferential side of the cylindrical member 36 inserted in the hollow part 144.

As shown in FIG 11(A), in the pressure shaping device 134, an elevating base 150 movable along the height direction by a device frame part (not shown) is disposed above the shaping mold 138 such that the elevating base 150 is interlocked with a hydraulic cylinder (not shown) operating in the height direction. A pressure plunger 152 formed cylindrically is projected from the lower surface part of the elevating base 150. The outer diameter of the pressure plunger 152 is provided slightly smaller than the inner diameter of the hollow part 144. A bag member 154 filled with a liquid L in the inside is mounted on the top end face of the pressure plunger 152. The bag member 154 has the outer shell shape thereof formed substantially like a cup opened upward such that the opening end part (upper end part) thereof is fixed on the top end face of the pressure plunger 152 along the entire circumference so as to be sealed closely from the outside by the top end face of the pressure plunger 152.

Here, the bag member 154 is formed with a membrane material made of a vulcanized rubber such as NR, NBR, BR, IR, IIR, NOR, and EPDM as the material so as to have sufficient elasticity and stretchability. Moreover, as the liquid L, various kinds of liquids such as water and oil can be used, and one having a low affinity with respect to the vulcanized rubber comprising the bag member 154 can be selected. The bag member 154 has the shape and the size set such that the outer diameter thereof is smaller than the inner diameter of the cylindrical member 36 in a state filled with the liquid L so as to be elastically deformed by the static pressure and the gravity and also the volume is larger than the content volume of the cylindrical member 36 by a predetermined amount or more. Specifically, the difference of the volume of the bag member 154 and the content volume of the cylindrical member 36 is set according to the size of the bulge pressure at the time of the hydro form shaping to be described later. The material of the bag member 154 may be other than vulcanized rubber as long as it has sufficient elasticity and stretchability. For example, a urethane elastomer can be used. Moreover, the bag member 154 may have plural kinds of materials laminated along the thickness direction.

The operation and the function of the pressure shaping device 134 according to this embodiment having the above-mentioned configuration will be explained.

At the time of shaping the shell 26 out of the cylindrical member 36, the operator binds the split molds 139, 140 of the shaping mold 138 at the shaping position by the switching mechanism and also sets the cylindrical member 36 in the hollow part 144 of the shaping mold 138 so as to complete the shaping preparation of the shell 26. After completing the shaping preparation, the pressure shaping device 134 lowers the elevating base 50 at the waiting position shown in FIG 11 (A) by the hydraulic cylinder so as to insert the bag member 154 mounted on the pressure plunger 152 on the inner circumferential side of the cylindrical member 36 in the hollow part 144. Thereby, the bag member 154 filled with the liquid L is in a stage clamped between the fixed plunger 148 and the pressure plunger 152 in the cylindrical member 36.

After inserting the bag member 154 into the cylindrical member 36, the pressure shaping device 134 further lowers the pressure plunger 152 by the hydraulic cylinder so as to compress the liquid L in the bag member 154 by the pressure plunger 152 for raising the liquid pressure of the liquid L. The pressured liquid L elastically deforms the bag member 154 so as to expand to the outer circumferential side according to the liquid pressure rise and presses evenly the outer circumferential surface part of the bag member 154 on the inner circumferential surface of the cylindrical member 36 as well as applying the liquid pressure to the cylindrical member 36 via the bag member 154.

The pressure shaping device 134 lowers the pressure cylinder to the pressure position so that the liquid pressure in the bag member 154 becomes a predetermined bulge pressure P by the hydraulic cylinder (see FIG 11(B)). The bulge pressure P from the liquid L is applied to the cylindrical member 36 via the bag member 154 so that the cylindrical member 36 with the bulge pressure P applied is deformed plastically so as to have the axial direction middle part facing the pressure shaping part 142 expand to the outer circumferential side for closely contacting to the inner surface of the pressure shaping part 142 without a gap. Thereby, the shape of the pressure shaping part 142 is transferred to the cylindrical member 36 in the axial direction middle part so that a pair of the convex part 26A and the concave part 26B are formed each continuously. By each forming of the convex parts 26A and the concave part 26B continuously in the cylindrical member 36, the cylindrical member 36 is shaped as the shell 26 as shown in FIG 5(A) (hydro form shaping).

After supporting the pressure plunger 152 at the pressure position for a certain time by the hydraulic cylinder, the pressure shaping device 134 returns the pressure plunger 152 to the waiting position shown in FIG 11(A). Then, the pressure shaping device 134 moves the split molds 139, 140 to the open position by the switching mechanism so as to open the shaping mold 138. By moving the split molds 139, 140 to the open position, the shaped shell 26 can be taken out.

The appropriate value of the bulge pressure P (Kgf/mm$^2$) will be explained, which is applied on the cylindrical member 36 via the bag member 154 in the shaping process for the shell 26 mentioned above. The thickness of the cylindrical member 36 is T (mm), the tensile strength of the high tension steel comprising the cylindrical member is S (Kgf/mm$^2$), and the constant for determining the bulge pressure P is K (K is a positive real number), whereby the appropriate value of the bulge pressure P can be calculated by the below-mentioned formula (1) in the shaping process:

$$P = K \times S \times T \ldots \text{Formula (1)}.$$

The constant K can be selected in a range of 1.5 to 20. It is preferable to select the constant K in a range of 2.0 to 15, and further preferably in a range of 2.0 to 10. By selecting optionally the constant K in the above-mentioned range even when the metal for the shell 26 is a metal other than high tension steel, such as a stainless steel and a ultra high tension steel, the appropriate value of the bulge pressure P can be calculated based on the formula (1).

If the constant K is set at a value less than 1.5, the bulge pressure P in the shaping process is insufficient so that the plastic deformation of the cylindrical member 36 for accurately following the shape of the pressure shaping part 142 can be difficult, and thus the shell 26 shaped from the cylindrical member 36 cannot be produced stably by a predetermined size accuracy. Moreover, accompanied by the size accuracy decline of the shell 26, the shape strengthening function of the convex part 26A and the concave part 26B is lowered so that the strength along the shell 26 radial direction or the twisting direction may be insufficient.

On the other hand, if the constant K is set at a value larger than 20, the bulge pressure P in the shaping process is excessive so that a large internal distortion may be generated in the shell 26 shaped out of the cylindrical member 36.

Moreover, since a pressure shaping device 134 having a pressuring ability higher than the set value of the bulge pressure P needs to be installed on the production line of the shell 26, if the bulge pressure is set at an excessively large value, the scale of the pressure shaping device 134 becomes excessively large so as to raise the installation cost of the pressure shaping device 134 for causing production cost increase of the shell 26. From this viewpoint, it is preferable to set the constant K at a value as small as possible within a certain range not to adversely affect the quality of the shell 26.

According to the pressure shaping device 134 according to this embodiment, the cylindrical member 36 can be deformed elastically to conform to the pressure shaping part 142 in the shaping mold 138 without contacting the liquid L with the cylindrical member 36 for the shell 26. This is caused by filling the inside of the bag member 154 with the liquid L, which is made of a membrane material having elasticity and stretchability, inserting the bag member 154 at the inner circumferential side of the cylindrical member 36 in the hollow part 144 of the shaping mold 138, and applying a predetermined bulge pressure to the cylindrical member 36 via the bag member 154 while expanding the bag member 154 to the outer circumferential side by pressuring the liquid L in the bag member 154 by the pressure plunger 152. The work for removing the liquid L from the shell 26 shaped out of the cylindrical member 36 can be eliminated.

As a result, since the adhesion of the liquid L to the shell 26 shaped out of the cylindrical member 36 can be prevented completely, generation of rust or chemical change on the shell 26 surface by the influence of the adhered liquid L can be prevented.

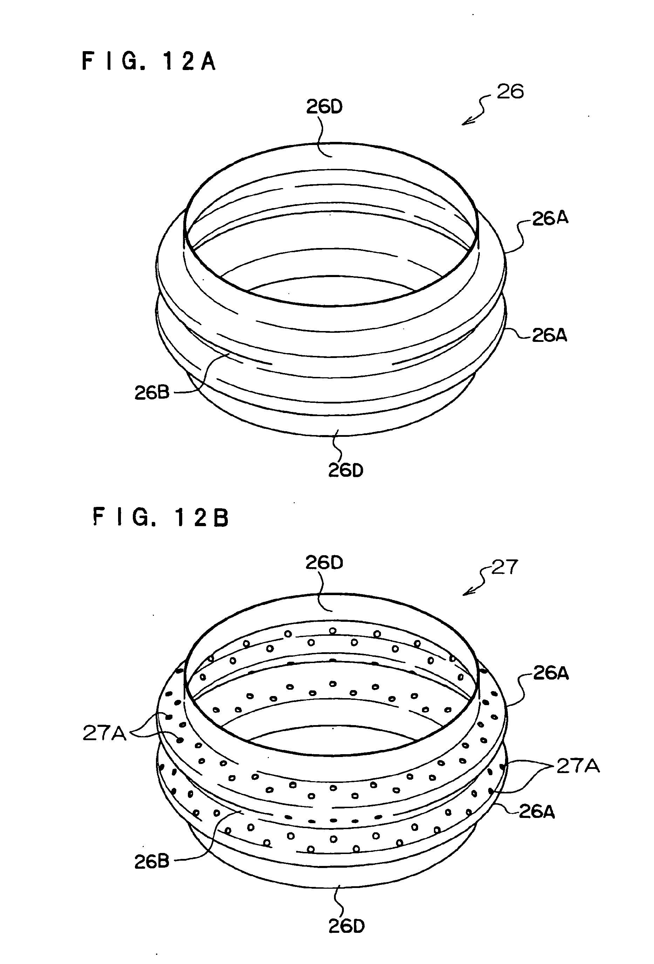

Moreover, according to the pressure shaping device 134 of this embodiment, since the liquid L is sealed in the bag member 154, compared with the pressure shaping device with the inside of the shaping mold directly filled with the liquid (see for example FIG 6), the sealing member for preventing the liquid L leakage from the hollow part 144 can be eliminated. Accordingly, changing the parts accompanied by the sealing member deterioration can be eliminated. Furthermore, a supporting ring 27 (see FIG 12(B)) made of a punching metal with a large number of through holes 27A or a supporting ring having a pair of cut ends made of a band like metal plate with an end can be shaped.

Moreover, in the pressure shaping device 134 of this embodiment, if a high strength metal material such as a high tension steel, a stainless steel and a ultra high tension steel is used for the cylindrical member 36, by controlling the bulge pressure P to be applied to the cylindrical member 36 to the calculation value of $(K \times S \times T)$, the cylindrical member 36 can be deformed plastically so as to accurately follow the shape of the pressure shaping part 142 in the shaping mold 138 so that a shell 26 having the desired size accuracy and mechanical performance can be produced stably and also the mechanical characteristics decline by the generation of the excessive distortion of the shell 26 can be prevented. Moreover, since the pressure shaping device 134 having an appropriate output can be selected adequately for the hydro form shaping of the shell 26, the production cost increase of the shell 26 can be restrained effectively.

Moreover, according to the pressure shaping device 134 according to this embodiment, the pressuring part inserting the pressure plunger 152 into the hollow part 144 by the hydraulic cylinder is used for pressuring the liquid L in the bag member 154. In addition, for example, preliminarily inserting the bag member 154 into the hollow part 144 and supplying the liquid L pressured by a high pressure pump, or the like may be employed as well. By measuring the liquid pressure of the liquid L in the bag member 154 with a pressure sensor and carrying out the feed back control of the liquid pressure based on the measurement result, the liquid pressure in the bag member 154 can be controlled accurately to the calculation value of $(K \times S \times T)$.

EXAMPLE 1

First comparison test

For confirming the shell production efficiency by the production method of the present embodiments, the comparison test of the examples and the comparative examples shown below was carried out.

As the material for the shells to be produced in the examples and the comparative examples, a 2.3 mm plate thickness aluminium alloy (JIS alloy number 6061-O material) was used.

According to the production of the shell of the examples, the material was shaped to the cylindrical member 36 shown in FIG 5(A) using the method of the third embodiment with the height H of the cylindrical member 36 being 200 mm and the inner diameter S of the cylindrical member 36 being 450 mm. After obtaining a pipe shaped cylindrical member 36 of FIG 5(B) by cutting the opening part 36D side (upper part in the figure) and the bottom plate part 36B side (lower part in the figure) of the cylindrical member 36 with a laser cutter, the two convex parts 26A, 26A shown in FIG 5(C) were shaped by the spatula shaping process and T6 heat treatment was applied so as to obtain the shell 26.

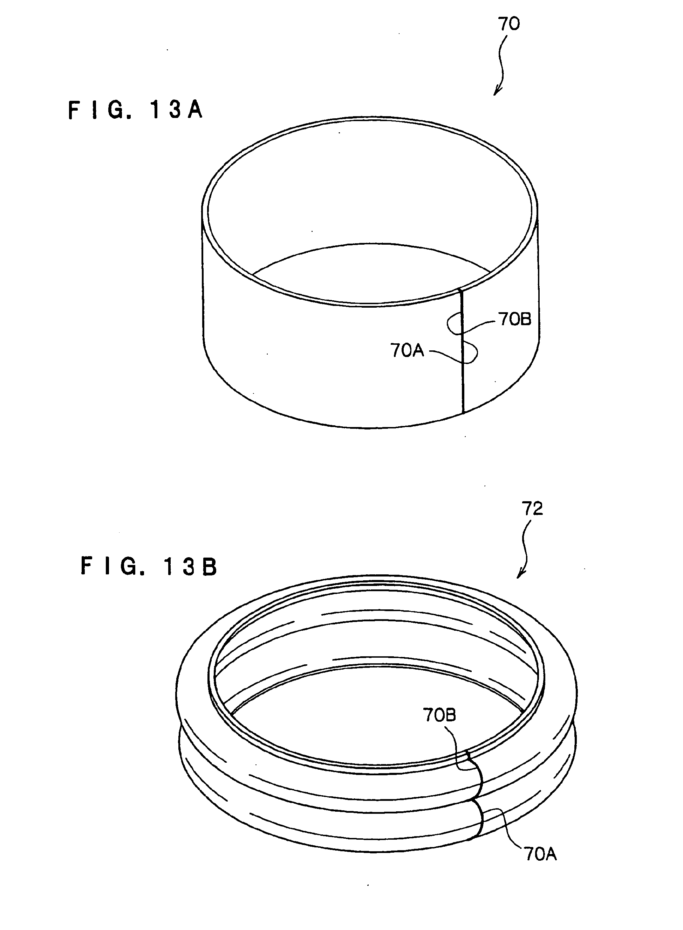

On the other hand, according to the production of the shell of the comparative examples, as shown in FIG 13 (A), a cylindrical member 70 was formed by applying the bending process to the material into a ring and bonding both end parts 70A, 70B in the longitudinal direction with each other by TIG welding. Thereafter, as shown in FIG 13(B), by the spatula drawing process, it was shaped into the same shape as in the example and T6 heat treatment was applied so as to obtain the shell 72.

Here, according to the comparison of the production time per one piece of the shell 26 (see FIG 5(C))of the example and the production time per one piece of the shell 72 (see FIG 13(B)) of the comparative example, the production time per one piece can be shortened in the example compared with the comparative example.

In the first and second embodiments, the shape and the size of the metal plate 30 may be determined so as to have the flange part 36C after the deep drawing process at the minimum level.

Moreover, shaping of the cylindrical member 36 by the deep drawing process in the embodiments may be so-called large number taking. If the cylindrical member 36 can be taken by a large number in the production stage of the shell 26, the production time per one piece can further be shortened.

Furthermore, although the shell 26 comprising the two convex parts 26A, 26A is formed in the embodiment, the shape of the shell 26 to be shaped is not limited thereto, and it may be a shape comprising a projecting part with the axial direction middle part projecting to the outside in the radial direction.

Second comparison test

For a shell with the hydro form shaping using the pressure shaping device 134 according to the embodiment shown in FIGS. 10 and 11 as the example A1, a shell with the hydro form shaping using the pressure shaping device of directly applying the bulge pressure P by the liquid L (see FIG 6) as the example A2, and moreover a shell with the rubber bulge shaping using the conventional pressure shaping device of applying the bulge pressure P with a rubber bulge as an elastic member without sealing a liquid in the inside as the comparative example A3, the examination results of the shell sizes shaped by the pressure shaping devices are each shown in the following (table 1). As to the bulge pressure of each pressure shaping device, the value calculated by the formula (1) with the constant K selected optionally in a range of 2.0 or more and 20 or less was used. In the size examination, the size of each part of the shell was measured so that those having difference of $\pm 5\%$ or less of the measurement size with respect to the design size were passed and those having difference of more than $\pm 5\%$ were not passed.

[Table 1]

| | Example A1 (hydro form shaping) | Example A2 (hydro form shaping) | Comparative example A3 (rubber bulge shaping) |
|---|---|---|---|
| Presence of absence of the drying process | Absent | Present | Absent |
| Number of shaping (pieces) | 10 | 10 | 10 |
| Number of the size examination passed (pieces) | 10 | 10 | 0 |

As it is apparent from the table 1, according to the shells with the hydro form shaping of the example A1 and the example A2, the total number (10 pieces) has passed the size examination, however, according to the shells according to the comparative example A3 with the rubber bulge shaping, the total number (10 pieces) has not passed the size examination. However, as to the shells according to the example A2, compared with the shells according to the example A1 and the comparative example A3, since the problem in terms of quality such as rust generation is generated if they are left after completing the shaping, the liquid L should be removed from the shell surface by drying, washing, or the like.

Third comparison test

For shells with the hydro form shaping with the constant K selected in a range of 1.5 to 20 and the bulge pressure P controlled to the calculation value of the formula (1) using the pressure shaping device 134 as the examples B1 to B6, and shells with the hydro form shaping with the constant K selected in a range of less than 2.0 or more than 20.0 and the bulge pressure P controlled to the calculation value of the formula (1) using the pressure shaping device 134 as the comparative examples B7 to B10, the evaluation results of the size accuracy and the compression strength of the shells 26 are each shown in the following (table 2). As to the evaluation result of the size accuracy, if the size error with respect to the design value is less than 2%, the mark is "◎", if the size error with respect to the design value is less than 5%, the mark is "○", if the size error with respect to the design value is 5% or more and less than 10%, the is mark "△", and if the size error with respect to the design value is more than 10%, the mark is " × ", as shown respectively. Moreover, as to the evaluation result of the compression strength, if the compression strength of 90% or more and 100% or less with respect to the maximum strength in the examples B1 to B6 is shown, the mark is "◎", if the compression strength of 80% or more and 90% or less is shown, the mark is "○", if the compression strength of 60% or more and 80% or less is shown, the mark is "△", and if the compression strength of 60% or less is shown, the mark is "✕", as shown respectively.

[Table 2]

| | Example B1 | Example B2 | Example B3 | Example B4 | Example B5 | Example B6 | Comparative Example B7 | Comparative Example B8 | Comparative Example B9 | Comparative Example B10 |
|---|---|---|---|---|---|---|---|---|---|---|
| Tensile strength (Kgf/ mm$^2$) | 60 | 60 | 60 | 60 | 60 | 80 | 60 | 60 | 60 | 80 |
| Thickne ss (mm) | 1.0 | 1.0 | 1.0 | 1.0 | 1.0 | 1.4 | 1.0 | 1.0 | 1.0 | 1.4 |
| Bulge pressure (Kgf/ mm$^2$) | 90 | 300 | 500 | 1000 | 1200 | 500 | 60 | 80 | 1400 | 100 |
| Constant K | 1.5 | 5.0 | 8.3 | 16.7 | 20.0 | 4.5 | 1.0 | 1.3 | 23.3 | 1.0 |
| Size accuracy | ○ | ◎ | ◎ | ○ | ○ | ◎ | × | Δ | ○ | × |
| Compre ssion strength | ○ | ◎ | ◎ | ○ | ○ | ◎ | × | Δ | Δ | × |

As it is apparent from the above-mentioned table 2, the examples B2, B3 and B6 in which the constant K was selected at 5.0 and 8.3 and 4.5 in a range of 2.0 to 10 and the bulge pressure P was controlled to the calculation value of the formula (1), the evaluation of both the size accuracy and the compression strength was "◎" for the shells 26.

Moreover, according to the shell 26 of the example B1 with the constant K selected at 1.5 in a range of 1.5 to 2.0, and according to the shells 26 of the examples B4 and B5 with the constant K selected at 16.7 and 20.0 in a range of more than 10 and 20 or less, the evaluation of both the size accuracy and the compression strength was "○".

On the other hand, according to the shells 26 of the comparative examples B7 to B10 with the constant K selected in a range of more than 20.0 and the bulge pressure P controlled to the calculation value of the formula (1), none had the evaluation "○" of both the size accuracy and the compression strength.

**Claims**

1. A production method for a run flat tire supporting member (16) capable of supporting load when run flat running comprising:

   shaping a cylindrical member (36) having a bottom part (36B) out of a flat plate metal member (30) by deep drawing;
   removing an opening part side (36D) and the bottom part side (36B) of the cylindrical member; and
   curving to shape the cylindrical member (36) into a shape comprising a projecting part (26A) at the axial direction middle part of the cylindrical member, projecting to the outside in the radial direction.

2. A production method for a run flat tire supporting member (16) capable of supporting load when run flat running comprising:

   shaping a cylindrical member (36) having a bottom part (36B) out of a flat plate metal member (30) by deep drawing;
   curving to shape the cylindrical member (36) into a shape comprising a projecting part (26A) at the axial direction middle part of the cylindrical member, projecting to the outside in the radial direction; and
   removing an opening part side (36D) and the bottom part side (36B) of the cylindrical member that has been curved into the shape comprising the projecting part.

3. A production method for a run flat tire supporting member as claimed in claim 1 or 2, the curving to shape the cylindrical member further comprising:

   inserting the cylindrical member (36) into an inner circumferential side of a cylindrical shaping mold (42) having an inner circumferential surface comprising a surface shape corresponding to the projecting part (26A);
   filling an inner circumferential member with a liquid (L);
   pressurizing the liquid; and
   curving the cylindrical member by the liquid pressure to conform to the shaping surface.

4. A production method for a run flat tire supporting member as claimed in claim 3, the curving to shape the cylindrical member further comprising:

   providing the liquid (L) sealed in an elastic bag member (154) on the inner circumferential side of the cylindrical member (36);
   pressurizing the liquid together with the bag member so as to apply the liquid pressure onto the cylindrical member via the bag member.

5. A production method for a run flat tire supporting member as claimed in claim 3 or 4, so as to set the bulge pressure P in a calculation value of the following formula in the shaping with a value selected as a constant K in a range of 1.5 to 20:

$$P = K \times S \times T$$

   wherein a bulge pressure, as the maximum value of the liquid pressure to be applied to the cylindrical member by the liquid filled on the inner circumferential side of the cylindrical member, is P (Kgf/mm$^2$), the thickness of the cylindrical member is T (mm), the tensile strength of the metal material comprising the cylindrical member is S (Kgf/mm$^2$), and the constant for determining the bulge pressure P is K (where K is a positive real number).

**6.** A production method as claimed in claim 1 or 2, for producing a ring shaped run flat tire supporting member (16) which is to be disposed inside a pneumatic tire (14) so as to be assembled onto a rim (12) together with the pneumatic tire, comprising:

inserting the metal cylindrical member (36), as the shaping material for the supporting member, into a hollow part provided on an inner circumferential side of a pressure shaping part (142A) in a ring form shaping mold (42), the pressure shaping part configuring a surface shape corresponding to a radial direction cross sectional shape of the supporting member, formed on the inner circumferential side of the ring form shaping mold;
inserting a bag member (154) made of an elastic and stretchable membrane material and filled inside with a liquid (L) into the hollow part on an inner circumferential side of the cylindrical member;
pressurizing the liquid in the bag member with a pressurizing part so as to apply the liquid pressure to the cylindrical member via the bag member;
plastically deforming the cylindrical member to conform to the pressure shaping part; wherein, so as to control a bulge pressure P in a calculation value of the following formula, a value in a range of 1.5 to 20 is selected as the constant K,

$$P = K \times S \times T$$

wherein the bulge pressure as the maximum value of the liquid pressure to be applied to the cylindrical member by the liquid pressurized by the pressurizing part via the bag member is P (Kgf/mm$^2$), the thickness of the cylindrical member is T (mm), the tensile strength of the metal material comprising the cylindrical member is S (Kgf/mm$^2$), and the constant for determining the bulge pressure P is K (where K is a positive real number).

**Patentansprüche**

**1.** Herstellungsverfahren für ein Bauteil zum Tragen eines Run-Flat- bzw. Pannenlaufreifens (16), welches geeignet ist, eine Ladung zu tragen, wenn mit plattem Reifen gefahren wird, umfassend:

Formen eines zylindrischen Bauteils (36) durch Tiefziehen, welches einen unteren Teil (36b) aus einem flachen Metallplattenteil (30) aufweist;
Entfernen einer Öffnungsteilseite (36D) und der unteren Teilseite (36B) des zylindrischen Bauteils; und
Biegen um das zylindrische Bauteil (36) in eine Form zu bringen, welche einen herausstehenden Teil (26A) beim mittleren Teil axial in Richtung des zylindrischen Bauteils umfasst, welcher in radialer Richtung heraussteht.

**2.** Herstellungsverfahren für ein Bauteil zum Tragen eines Run-Flat-Reifens (16), welches geeignet ist, eine Ladung zu tragen, wenn mit platten Reifen gefahren wird, umfassend:

Formen eines zylindrischen Bauteils (36) durch Tiefziehen, welches einen unteren Teil (36B) aufweist, aus einem flachen Metallplattenteil (30);
Biegen um das zylindrische Bauteil (36) in eine Form zu bringen, welche ein herausstehendes Teil (26A) beim mittleren Teil axial in Richtung des zylindrischen Bauteils umfasst, welcher in radialer Richtung heraussteht; und
Entfernen einer Öffnungsteilseite (36D) und der unteren Teilseite (36B) des zylindrischen Bauteils, welches in die Form gebogen wurde, welche den herausstehenden Teil umfasst.

**3.** Herstellungsverfahren für ein Bauteil zum Tragen eines Run-Flat-Reifens nach Anspruch 1 oder 2, wobei das Biegen zum Formen des zylindrischen Bauteils des Weiteren umfasst:

Einfügen des zylindrischen Bauteils (36) in eine innere Umfangsseite eines zylindrischen Formwerkzeugs (42), welches eine innere Umfangsoberfläche aufweist, welche eine Oberflächenform umfasst, welche dem herausstehenden Teil (26A) entspricht;

Befüllen eines inneren Umfangsteils mit einer Flüssigkeit (L); unter Druck setzen der Flüssigkeit; und

Biegen des zylindrischen Bauteils durch den Flüssigkeitsdruck um der Formoberfläche zu entsprechen.

4. Herstellungsverfahren für ein Bauteil zum Tragen eines Run-Flat-Reifens nach Anspruch 3, wobei das Biegen zum Formen des zylindrischen Bauteils des Weiteren umfasst:

Bereitstellen der Flüssigkeit (L), welche in einem elastischen Taschenbauteil (154) versiegelt ist, auf der inneren Umfangsseite des zylindrischen Bauteils (36);

unter Druck setzen der Flüssigkeit zusammen mit dem Taschenbauteil um den Flüssigkeitsdruck auf dem zylindrischen Bauteil über das Taschenbauteil anzuwenden.

5. Herstellungsverfahren für ein Bauteil zum Halten eines Run-Flat-Reifens nach Anspruch 3 oder 4, wobei der Wölbungsdruck P in einem Rechnungswert der folgenden Formel beim Formen eingestellt wird, mit einem Wert, welcher als Konstante K im Bereich von 1,5 bis 20 gewählt wird:

$$P = K \times S \times T$$

wobei ein Wölbungsdruck als der maximale Wert des Flüssigkeitsrucks, welcher auf das zylindrische Bauteil durch die Flüssigkeit aufgebracht wird, welche auf der inneren Umfangsseite des zylindrischen Bauteils gefüllt ist, P ($Kgf/mm^2$) ist, die Dicke des zylindrischen Bauteils T (mm) ist, die Zugfestigkeit des metallischen Materials, welches das zylindrische Bauteil umfasst, S ($Kgf/mm^2$) ist und die Konstante zum Bestimmen des Wölbungsdrucks P K ist (wobei K eine positive reale Zahl ist).

6. Herstellungsverfahren nach Anspruch 1 oder 2 zum Herstellen eines ringförmigen Bauteils (16) zum Tragen eines Run-Flat-Reifens, welches im inneren eines pneumatischen Reifens (14) angeordnet werden soll, um auf einen Rand (12) zusammen mit dem pneumatischen Reifen zusammengesetzt zu werden, umfassend:

Einfügen des metallischen zylindrischen Bauteils (36) als Formmaterial für das Tragebauteil in einen hohlen Teil, welcher auf einer inneren Umfangsseite eines Druckformteils (142A) in einem ringförmigen Formwerkzeug (42) bereitgestellt wird, wobei das Druckformteil eine Oberflächenform konfiguriert, welche einer Querschnittsform in radialer Richtung des Bauteils zum Tragen entspricht, welches auf der inneren Umfangsseite der Ringform bildenden Form (42) geformt wird;

Einfügen eines Taschenbauteils (154), welches aus einem elastischen und dehnbaren Membranmaterial hergestellt ist, und welches im Inneren mit einer Flüssigkeit (L) befüllt ist, in den hohlen Teil auf einer inneren Umfangsseite des zylindrischen Bauteils;

unter Druck setzen der Flüssigkeit in dem Taschenbauteil mit einem Druckteil um den Flüssigkeitsdruck auf das zylindrische Bauteil über das Taschenbauteil aufzubringen;

plastisches Deformieren des zylindrischen Bauteils um es an das Druck formende Teil anzupassen; wobei, um einen Wölbungsdruck P in einem Rechnungswert der folgenden Formel zu steuern, ein Wert im Bereich von 1,5 bis 20 als Konstante K gewählt wird;

$$P = K \times S \times T$$

wobei der Wölbungsdruck als Maximalwert des Flüssigkeitsdrucks, welcher auf das zylindrische Bauteil durch die Flüssigkeit unter Druck durch den Druckteil über das Taschenbauteil aufgebracht wird, P ($Kgf/mm^2$) ist, die Dicke des zylindrischen Bauteils T (mm) ist, die Zugfestigkeit des metallischen Materials, welches das zylindrische Bauteil umfasst, S ($Kgf/mm^2$) ist, und die Konstante zum Bestimmen des Wölbungsdrucks P K ist (wobei K eine positive reale Zahl ist).

**Revendications**

1. Procédé de production d'un élément de support de pneu à flancs renforcés (16) capable de supporter une charge lors d'un fonctionnement à l'état dégonflé, consistant à ;

façonner un élément cylindrique (36) ayant une partie de fond (36B), à partir d'un élément métallique en forme de plaque plane (30) par emboutissage profond ;

retirer un côté d'une partie d'ouverture (36D) et le côté de la partie de fond (36B) de l'élément cylindrique ; et

incurver la forme de l'élément cylindrique (36) en une forme comprenant une partie protubérante (26A) à l'emplacement de la partie médiane dans la direction axiale de l'élément cylindrique, faisant saillie vers l'extérieur dans la direction radiale.

2. Procédé de production d'un élément de support de pneu à flancs renforcés (16) capable de supporter une charge lors d'un fonctionnement à l'état dégonflé, consistant à ;

façonner un élément de support (36) ayant une partie de fond (36B) à partir d'un élément métallique en forme de plaque plane (30) par emboutissage profond ;

incurver la forme de l'élément cylindrique (36) en une forme comprenant une partie protubérante (26A) à l'emplacement de la partie médiane dans la direction axiale de l'élément cylindrique, faisant saillie vers l'extérieur dans la direction radiale ; et

retirer un côté d'une partie d'ouverture (36D) et le côté de la partie de fond (36B) de l'élément cylindrique ayant été incurvé en une forme comprenant la partie faisant saillie.

3. Procédé de production destiné à un élément de support de pneu à flancs renforcés selon la revendication 1 ou 2, l'étape consistant à incurver la forme de l'élément cylindrique consistant en outre à ;

insérer l'élément cylindrique (36) à l'intérieur d'une face circonférentielle interne d'un moule de façonnage cylindrique (42) ayant une surface circonférentielle interne comprenant une forme superficielle correspondant à la partie protubérante (26A) ;

remplir un élément circonférentiel interne d'un liquide (L) ;

mettre le liquide sous pression ; et

incurver l'élément cylindrique sous l'effet de la pression de liquide pour qu'il s'adapte à la forme de la surface de façonnage.

4. Procédé de production d'un élément de support de pneu à flancs renforcés selon la revendication 3, l'étape consistant à incurver la forme de l'élément cylindrique consistant en outre à ;

disposer le liquide (L) de façon étanche dans un élément formant sac élastique (154) sur la face circonférentielle interne de l'élément cylindrique (36) ;

mettre le liquide sous pression en même temps que l'élément formant sac afin d'appliquer la pression de liquide à l'élément cylindrique par l'intermédiaire de l'élément formant sac.

5. Procédé de production d'un élément de support de pneu à flancs renforcés selon la revendication 3 ou 4, de façon à régler la pression de gonflement P dans une valeur calculée par la formule suivante lors du façonnage, dans lequel on sélectionne pour la constante K une valeur dans la gamme de 1,5 à 20 ;

$$P = K \times S \times T$$

où une pression de gonflement définie comme étant la valeur maximale de la pression de liquide devant être appliquée à l'élément cylindrique par le liquide de remplissage sur la face circonférentielle interne de l'élément cylindrique, est égale à P (kgf/mm$^2$), l'épaisseur de l'élément cylindrique est égale à T (mm), la résistance à la traction du matériau métallique constituant l'élément cylindrique est égale à S (kgf/mm$^2$), et la constante permettant de déterminer la pression de gonflement P est égale à K (où K est un nombre réel positif).

6. Procédé de production selon la revendication 1 ou 2, destiné à produire un élément de support de pneu à flancs renforcés (16) de forme annulaire qui doit être disposé à l'intérieur d'un pneumatique (14) de façon qu'il puisse être assemblé sur une jante (12) en association avec le pneumatique, consistant à ;

insérer l'élément cylindrique métallique (36), en tant que matériau de façonnage de l'élément de support, dans une partie creuse prévue sur une face circonférentielle interne d'une partie de façonnage sous pression (142A) dans un moule de façonnage annulaire (42), la partie de façonnage sous pression configurant une forme superficielle correspondant à une forme en coupe transversale dans la direction radiale de l'élément de support, formée sur la face circonférentielle interne du moule de façonnage annulaire ;

insérer un élément formant sac (154) constitué d'un matériau de membrane élastique et étirable et rempli intérieurement d'un liquide (L) à l'intérieur de la partie creuse sur une face circonférentielle interne de l'élément cylindrique ;

mettre sous pression le liquide se trouvant dans l'élément formant sac avec une partie de mise sous pression afin d'appliquer la pression de liquide à l'élément cylindrique par l'intermédiaire de l'élément formant sac ;

déformer de façon plastique l'élément cylindrique afin que sa forme s'adapte à celle de la partie de façonnage sous pression ; dans lequel, pour commander une pression de gonflement P dans une valeur calculée par la formule suivante, on sélectionne pour la constante K une valeur dans la gamme de 1,5 à 20 ;

$$P = K \times S \times T$$

où la pression de gonflement définie comme étant la valeur maximale de la pression de liquide devant être appliquée à l'élément cylindrique par le liquide mis sous pression par la partie de mise sous pression par l'intermédiaire de l'élément formant sac, est égale à P (kgf/mm$^2$), l'épaisseur de l'élément cylindrique est égale à T (mm), la résistance à la traction du matériau métallique constituant l'élément cylindrique est égale à S (kgf/mm$^2$), et la constante permettant de déterminer la pression de gonflement P est égale à K (où K est un nombre réel positif).

# F I G. 1

# F I G. 2

FIG. 3

F I G. 4

FIG. 5A

FIG. 5B

FIG. 5C

EP 1 695 814 B1

FIG. 6A

FIG. 6B

F I G. 7A

36C 36D 36

D

36B

36A

F I G. 7B

36C 80

36B

38

26A 26A

39

F I G. 7C

106

26A

26A

FIG. 8A

FIG. 8B

EP 1 695 814 B1

F I G. 9

# FIG. 10

FIG. 11A

FIG. 11B

FIG. 12A

26D

26

26A

26A

26B

26D

FIG. 12B

26D

27

26A

27A

27A

26A

26B

26D

FIG. 13A

70

70B

70A

FIG. 13B

72

70B

70A

**EP 1 695 814 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10297226 A
- JP 2004001022 A
- JP 53026253 A
- JP 2004034904 A
- JP 52130465 A
- JP 5504726 A